Europäisches Patentamt

European Patent Office

Office européen des brevets

(11) Publication number: **0 109 090
B1**

(12) **EUROPEAN PATENT SPECIFICATION**

(45) Date of publication of patent specification: **03.02.88**

(21) Application number: **83111443.4**

(22) Date of filing: **15.11.83**

(51) Int. Cl.⁴: **H 01 G 4/38, H 01 G 13/06**

(54) **Multiple-capacitor coil of a metallized strip material.**

(30) Priority: **16.11.82 IT 4573582**

(43) Date of publication of application:
**23.05.84 Bulletin 84/21**

(45) Publication of the grant of the patent:
**03.02.88 Bulletin 88/05**

(84) Designated Contracting States:
**AT BE CH DE FR GB IT LI LU NL SE**

(56) References cited:
**GB-A- 436 128
GB-A-2 052 862
US-A-3 921 041**

(73) Proprietor: **Zanussi Elettromeccanica S.p.A.
Via Giardini Cattaneo 3
I-33170 Pordenone-C.P. 147 (IT)**

(72) Inventor: **de Faveri, Americo
Via Campello
I-32013 Longarone (Belluno) (IT)**
Inventor: **Zanvettor, Sergio
Via di Sopra 54
I-32010 Ospitale di Cadore (Belluno) (IT)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

The present invention relates to a multi-capacitor coil according to the prior art portion of Claim 1. Such a multi-capacitor coil is known from GB—A—2052862.

From US—A—3,921,041 and US—A—4,028,595, for instance, it is also known to form, in a one-piece structure made of a metallized insulating strip material, a plurality of coaxially wound capacitors electrically separated from each other by a number of windings formed solely of an insulating strip material and projecting beyond the end faces of the coil.

The method for making such coils is undesirably divided into sequential steps, and thus complicated, by the necessity to at least once interrupt the winding of the metallized strip material for winding the above mentioned "bare" insulating strip material. In addition, if it is desired to obtain capacitors of low capacity values, the individual coaxial capacitors have each to be formed of a relatively small number of windings, resulting in their end faces being very narrow, so that it becomes very difficult to fasten the required terminals thereto.

These difficulties are minimized in a multiple-capacity coil of the type described for example in EP—A—90170 filed in the name of the present Applicant, and published on October 5, 1983.

Said EP—A—90170 falls under Art 54(3) EPC for the following designated contracting States: AT, BE, CH, DE, FR, GB, IT, LI, NL, SE.

A coil of the type disclosed in said EP—A—90170 is formed of a first metallized dielectric strip having free edge portions and a second dielectric strip having at least two metal layers extending to its lateral edges and separated from one another by a non-metallized zone. At least two incisions are formed in the coil extending from one of its end faces at least down to the separation zone between the metal layers of the second strip, so as to divide the coil into a number of separate capacities.

This construction is particularly advantageous, but still not completely satisfactory from the viewpoint of production on an industrial scale, as the formation of the incisions has to take place after the metallized strips have been wound to form the finished coil, whereby the production time is undesirably extended. In addition, the incision may in certain cases weaken the mechanical structure of the entire coil, and is sometimes the cause for short-circuits between the metal layers.

It is therefore the object of the present invention to provide a multiple-capacity coil of a metallized strip material, which is able of being produced fully automatized in a simple and economical manner and the mechanical structure of which is particularly simple and solid and which does not present problems with respect to electrical insulation.

According to the invention, these objects are met by the features set forth in the characterizing portion of claim 1. A preferred embodiment of a multi-capacitor coil is subject matter of claim 2.

The characteristics and advantages of the invention will become more clearly evident from the following description, given by way of a nonlimiting example, with reference to the accompanying drawings, wherein:

Fig. 1 shows a diagrammatic cross-sectional view of two metallized strips to be wound into a coil according to the invention,

Fig. 2 shows a modification of Fig. 1,

Fig. 3 shows a diagrammatic top plan view of a coil in an embodiment of the invention,

Figs. 4 and 5 show diagrammatic elevational views of two embodiments of a coil corresponding to Fig. 3,

Fig. 6 shows the electric circuit diagram of the coil shown in Fig. 4,

Fig. 7 shows the electric circuit diagram of the coil shown in Fig. 5,

Fig. 8 shows a diagrammatic top plan view of a modification of the coil shown in Fig. 3,

Fig. 9 shows a diagrammatic elevational view of the coil shown in Fig. 2,

Fig. 10 shows the electric circuit diagram of the coil shown in Fig. 9,

Fig. 11 shows a diagrammatic perspective view of the metallized strips of Fig. 1 in the course of being wound into a coil in a preferred embodiment of the method according to the invention,

Figs. 12 and 13 show further modifications of Fig. 1,

Figs. 14 and 15 show diagrammatic elevational views of modifications of the coil shown in Fig. 3,

Fig. 16 shows the electric circuit diagram of the coil shown in Fig. 14, and

Fig. 17 shows the electric circuit diagram of the coil shown in Fig. 15.

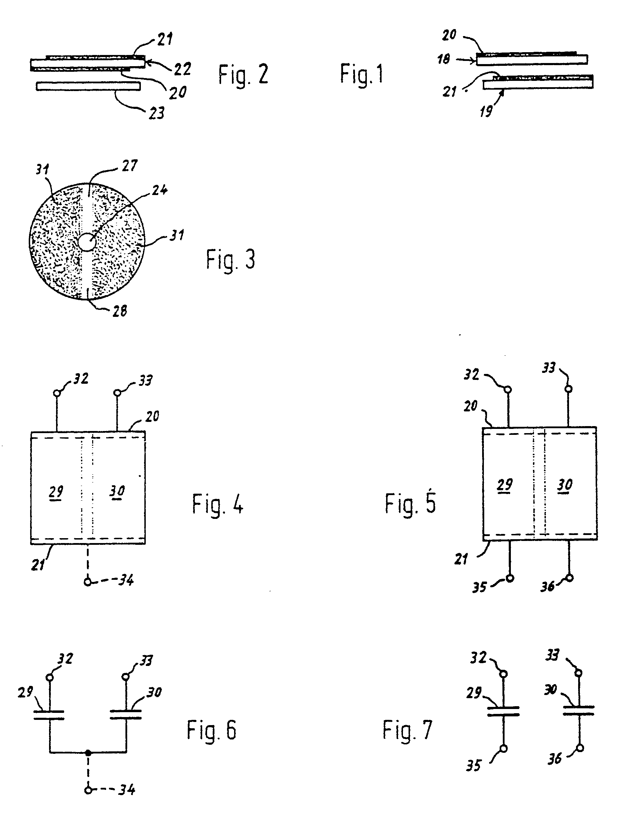

With reference to Fig. 1, the coil according to the invention may be formed by winding two superimposed dielectric strips 18, 19 each provided on one face thereof with a metal layer 20, 21 in a per se known offset arrangement. Alternatively, the two metal layers 20, 21 may be formed on opposite sides of a single dielectric strip 22 to be wound in superimposed relationship with a dielectric strip 23 (Fig. 2).

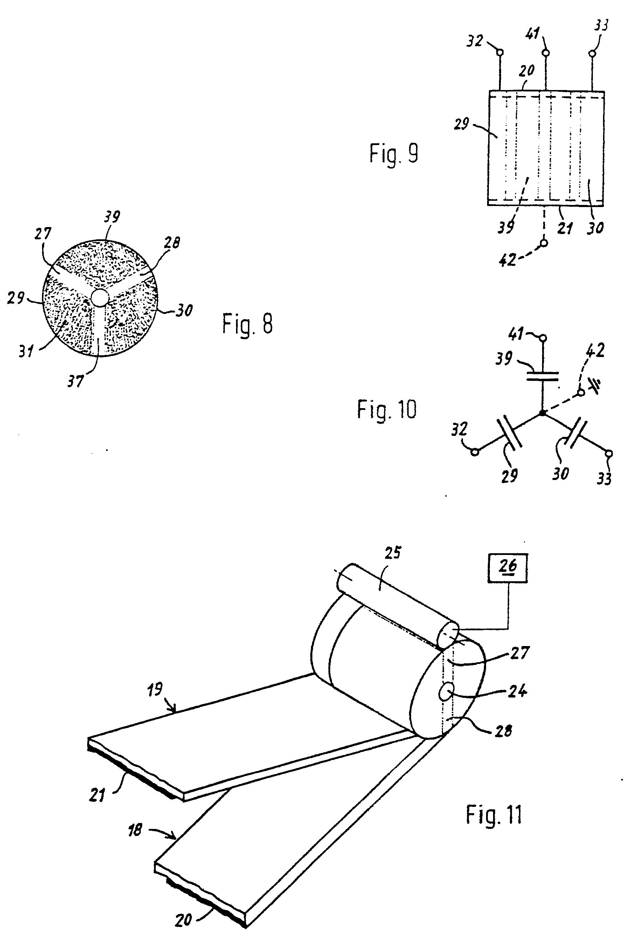

The metallized strips 18 and 19, or the twin-metallized strip 22 and dielectric strip 23, respectively, are wound in a per se known manner for a certain number of windings onto a winding core 24 as shown in Fig. 11. During the winding operation, metal layer 20 of strip 18 cooperates with a thermoelectric evaporation electrode 25. This electrode may for instance be of the type described in the above mentioned US—A—3,921,041, but is preferably formed as a spring-biased roller adapted to be connected to a source (not shown) of electric current under the control of a control unit 26 diagrammatically indicated in Fig. 11. This control unit is readily designed by one skilled in the art in accordance with the desired operating characteristics.

According to the invention, control unit 26 is designed to cyclically activate electrode 25 so as to demetallize strip 18 for each winding of the coil so as to form at least two transverse interstices 27 and 28 in each winding of the respective metal layer, as shown in Figs. 3 and 11.

The metal layer 20 of strip 18 is thus formed for each winding of the coil with two separate interstices 27 and 28 extending substantially transversely, according to the orientation of electrode 25 and having a predetermined, preferably equal, width in the longitudinal direction.

According to one aspect of the invention, these interstices of the metal layer are formed at positions resulting in the interstices 27 and the interstices 28, respectively, being substantially radially aligned in the finished coil. After spraying a short-circulating metal layer 31 onto the end face of the coil whereat the sectioned metal layer 20 is exposed, with a suitable mask having previously been applied thereto for covering the aligned interstices 27 and 28, the resultant coil includes two separate capacitors 29, 30 (Fig. 4 and 6) separated from one another by interstices 27 and 28 and connected in series with one another by having a common electrode formed by metal layer 21. For completing the multiple-capacity coil, a pair of terminals 32 and 33, respectively, for capacitors 29 and 30 may be secured to the metal layer 31 covering the respective end face. By depositing a short-circuiting metal layer to the opposite end face of the coil, it is also possible to affix a further terminal 34 to the common electrode 21. Although in Figs. 3 and 11 the interstices 27 and 28 are shown to be diametrally aligned, it is also possible to align them at various angular positions relative to one another so as to obtain two capacitors of different capacity values.

In any case, apart from the conventional step of depositing metal layers on the end faces, it is evident that according to the invention the finished coil is automatically divided into several capacities such as 29, 30 without the necessity of any auxiliary operations or interruptions in the operation of forming the coil itself.

In addition, the individual capacities of the finished multiple-capacity coil are separated from each other by structural components, namely, interstices 27 and 28, ensuring optimum electric insulation between the electrodes while imparting a solid mechanical structure to the coil.

In a modification, metal layer 21 may also be formed with interstices 27 and 28 by means of an electrode or the like corresponding to the one shown at 25. These interstices may likewise be formed as the strips 18 and 19 are wound into a coil, and are substantially identical to the interstices of metal layer 20 and preferably congruent therewith.

In this case both end faces of the coil offer the aspect as shown in Fig. 3 after a short-circuiting metal layer has been deposited thereon, the respective interstices having previously been suitably masked. The coil in this case includes two capacitors electrically separated from one another as shown at 29 and 30 in Figs. 5 and 7. Each capacitor 29, 30 may then be provided with two terminals 32, 35 and 33, 36, respectively.

It is of course also possible to form the interstices 27 and 28 in metal layer 20 at angular positions different from those of interstices in the other metal layer 21 so as to provide a variety of capacitive networks.

It is further possible to form the interstices 27 and 28 of metal layers 20 and/or 21 prior to the strip winding operation, employing other means than the electrode 25 shown in combination with control unit 26. It is thus possible to employ a laser device or the like to this purpose.

It is further possible to obtain even more complex capacitive networks in one and the same coil, such as by forming more than two interstices per winding solely in metal layer 20 by simply adjusting the control unit 26 shown in Fig. 11 accordingly. There may thus be formed three angularly equidistant interstices 27, 28 and 37 in each winding of the coil, as shown in Figs. 8 and 9. Depositing a short-circuiting metal layer 31 on the end face of the coil whereat the metal layer 20 is exposed, the areas of interstices 27, 28, 37 having previously been suitably masked, results in the formation of three separate capacitors 29, 30 and 39 having a common electrode formed by metal layer 21. The three capacitors may then be provided with separate terminals 32, 33 and 41, respectively, to obtain a capacitive filter of the star configuration shown in Fig. 10. This filter may also be provided with a connection for the common electrode by simply depositing a short-circuiting metal layer on the opposite end face of the coil and securing a further terminal 42 thereto.

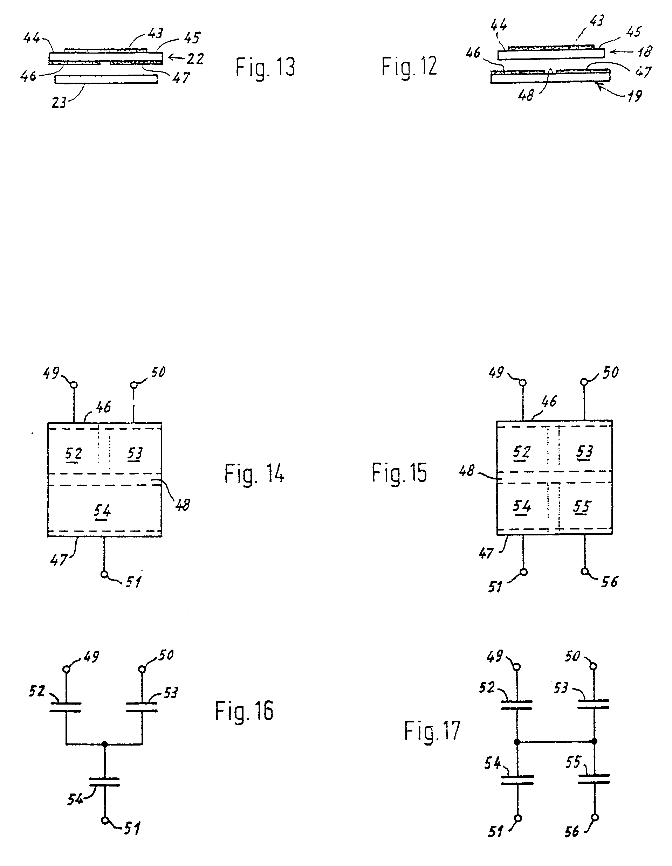

According to the invention, the multiple-capacity coil may also be formed of different metallized strips as shown for instance in Fig. 12, wherein dielectric strip 18 has one of its sides provided with a metal layer 43 leaving two metal-free border areas 44, 45 along the edges of the strip. The other dielectric strip 19 has one of its sides provided with two metal layers 46 and 47 extending to the lateral edges of the strip 19 and electrically separated from one another by a metal-free center area 48. As an alternative, metal layers 43 and 46, 47 may be provided on opposite faces of a single metallized strip 22 associated with a simple dielectric strip 23 (Fig. 13).

During the winding operation of strips 18, 19, or 22, 23, respectively, the above described method may be employed for forming transverse interstices 27, 28 in metal layer 46 alone or, depending on the length and/or location of electrode 25, in both metal layers 46 and 47.

The end face of the coil thus obtained is subsequently provided with a short-circuiting metal layer 31, the areas of interstices 27, 28 having previously masked as shown in Fig. 3, whereupon the required terminals may be secured thereto. If, as shown in Figs. 14 and 16, the interstices 27 and 28 are formed in metal layer 46 alone, the resulting coil forms a capacitive network 52, 53, 54 including terminals 49, 50 and 51, respectively, and having a common electrode formed by metal layer 43.

If on the other hand the interstices 27 and 28 are formed side by side in both metal layers 46 and 47, the resulting coil after depositing metal layers on its end faces and securing respective terminals 49, 50, 51 and 56 thereto forms a capacitive network 52—55 (Fig. 15 and 17) having a common electrode formed by metal layer 43.

It is of course also possible to form the interstices 27 and 28 at longitudinally offset positions in metal layer 46 with respect to similar interstices in metal layer 47.

This is only one of numerous further modifications envisaged for the described multiple-capacity coil or for the method for its manufacture, respectively. As a matter of fact, all of the previously described possible constructions may be combined with each other in any suitable manner or may be modified to meet any requirement.

It is further possible to employ metallized strips having a different number of metal layers in side by side relationship. Also, the interstices 27 and 28 may be formed in the respective metal layers during manufacture of the metallized strips.

## Claims

1. A multi-capacitor coil comprising two dielectric strips and at least first and second metal layers (20, 21) wound in the longitudinal direction for a certain number of windings, said metal layers (20, 21) being partially superimposed and electrically insulated from one another by said dielectric strips (18, 19; 22, 23) and being interrupted·by at lesat two demetallized zones (27, 28) of selected width extending parallely with respect to each other and to the axis of said coil characterised in that said demetallized zones (27, 28) are provided at least in one of the metal layers (20, 21) in each of the windings, the demetallized zones (27, 28) of the respective metal layer being substantially radially aligned in the coil.

2. A coil as set forth in claim 1 wherein all of said at least first and second metal layers (20, 21) have said demetallized zones (27, 28) in each of the windings, the demetallized zones (27, 28) in the first metal layer (20) being angularly offset from those in the second metal layer (21) in said coil.

## Patentansprüche

1. Mehrfachkondensatorwicklung, enthaltend zwei dielektrische Streifen und wenigstens erste und zweite Metallschichten (20, 21), die in der Längsrichtung für eine gewisse Anzahl von Windungen aufgewickelt sind, wobei die Metallschichten (20, 21) teilweise übereinanderliegen und elektrisch voneinander durch die dielektrischen Streifen (18, 19; 22, 23) isoliert sind und durch wenigstens zwei entmetallisierte Zonen (27, 28) ausgewählter Breite unterbrochen sind, die sich parallel zueinander und zur Achse der Wicklung erstrecken, dadurch gekennzeichnet, daß die entmetallisierten Zonen (27, 28) wenigstens in einer der Metallschichten (20, 21) in jeder der Windungen vorgesehen sind, wobei die entmetallisierten Zonen (27, 28) der jeweiligen Metallschicht im wesentlichen radial in der Wicklung aufeinander ausgerichtet sind.

2. Wicklung nach Anspruch 1, bei der alle der genannten wenigstens ersten und zweiten Metallschichten (20, 21) die genannten entmetallisierten Zonen (27, 28) in jeder der Windungen aufweisen, wobei die entmetallisierten Zonen (27, 28) in der ersten Metallschicht (20) im Winkel gegenüber jenen in der zweiten Metallschicht (21) in der Wicklung versetzt sind.

## Revendications

1. Enroulement à plusieurs condensateurs comprenant deux bandes diélectriques et au moins une première et une deuxième couches métalliques (20, 21) enroulées dans la direction longitudinale sur un certain nombre de spires, les couches métalliques (20, 21) étant partiellement superposées et électriquement isolées l'une de l'autre par les bandes diélectriques (18, 19; 22, 23) et étant interrompues par au moins deux zones démétallisées (27, 28) de largeur sélectionnée s'étendant parallèlement l'une par rapport à l'autre et à l'axe de l'enroulement, caractérisé en ce que ces zones démétallisées (27, 28) sont prévues au moins dans l'une des couches métalliques (20, 21) dans chacune des spires, les zones démétallisées (27, 28) de la couche métallique correspondante étant pratiquement radialement alignée dans l'enroulement.

2. Enroulement selon la revendication 1, dans lequel toutes lesdites couches métalliques (20, 21) ont ces zones démétallisées (27, 28) dans chacune des spires, les zones démétallisées (27, 28) dans la première couche métallique (20) étant angulairement décalées par rapport à celles dans la deuxième couche métallique (21) dans l'enroulement.

Fig. 2

Fig. 1

Fig. 3

Fig. 4

Fig. 5

Fig. 6

Fig. 7

1

Fig. 9

Fig. 8

Fig. 10

Fig. 11

0 109 090

Fig. 13

Fig. 12

Fig. 14

Fig. 15

Fig. 16

Fig. 17

3